# EUROPÄISCHE PATENTSCHRIFT

(11) **EP 2 707 839 B1**
(45) Veröffentlichungstag und Bekanntmachung des Hinweises auf die Patenterteilung: **21.12.2016**
(21) Anmeldenummer: 12727318.3
(22) Anmeldetag: 14.05.2012
(51) Int. Cl.: G06K 19/06, G06K 19/073, G07F 7/08

(54) **VERFAHREN ZUR DEAKTIVIERUNG UND AKTIVIERUNG DES MAGNETSTREIFENS EINER CHIPKARTE**
METHOD OF DEACTIVATING AND ACTIVATING THE MAGNETIC STRIPE ON A CHIPCARD
PROCÉDÉ D'ACTIVATION ET DE DÉSACTIVATION DE LA PISTE MAGNÉTIQUE D'UNE CARTE A PUCE

(30) Priorität: 12.05.2011 DE 102011050307
(43) Veröffentlichungstag der Anmeldung: 19.03.2014
(73) Patentinhaber: Wincor Nixdorf International GmbH, 33106 Paderborn (DE)
(72) Erfinder: SCHLIEBE, Dieter, 33181 Bad Wünnenberg (DE)
(74) Vertreter: Schaumburg und Partner Patentanwälte mbB
(86) Internationale Anmeldenummer: PCT/EP2012/058865
(87) Internationale Veröffentlichungsnummer: WO 2012/152944

(56) Entgegenhaltungen:
- US-A- 5 949 046
- US-A1- 2005 006 462
- US-A1- 2008 121 726
- ABFALLWOSCHT (PSEUDONYM): "EC-Karte Magnetstreifen unbrauchbar machen (Skimming-Schutz) - Beitrag im Gulli-Diskussionsforum", INTERNET CITATION, 10. März 2010 (2010-03-10), Seiten 1-2, XP007920956, Gefunden im Internet: URL:http://board.gulli.com/thread/1532041- ec-karte-magnetstreifen-unbrauchbar-machen / [gefunden am 2012-08-21]

## Beschreibung

Die Erfindung betrifft ein Verfahren zum reversiblen Deaktivieren eines Magnetstreifens einer Chip- und Magnetstreifenkarte, wobei auf dem Magnetstreifen und Chip jeweils Daten zum Durchführen von Geldtransaktionen gespeichert sind. Ferner betrifft die Erfindung ein Verfahren zum Aktivieren eines Magnetstreifens einer Chip- und Magnetstreifenkarte, wobei auf dem Magnetstreifen der Chip- und Magnetstreifenkarte nicht alle zum Durchführen der Geldtransaktion notwendigen Daten gespeichert sind.

Die erfindungsgemäßen Verfahren werden insbesondere im Zusammenhang mit EC-Karten, Bankkarten und/oder Kreditkarten verwendet, die sowohl einen Chip als auch einen Magnetstreifen umfassen. Die zum Durchführen von Geldtransaktionen, insbesondere dem Überweisen von Geld und dem Abheben von Bargeld, notwendigen Daten sind bei bekannten Chip- und Magnetstreifenkarten sowohl auf dem Chip als auch auf dem Magnetstreifen gespeichert, damit die Geldtransaktionen sowohl mit Hilfe von Kartenlesegeräten, die lediglich Magnetstreifen auslesen können, als auch mit Kartenlesegeräten, die lediglich Chips oder sowohl Chips als auch Magnetstreifen auslesen können, durchgeführt werden können.

Hierzu sind sowohl in einem Speicherbereich des Chips als auch in dem Magnetstreifen u.a. die Kontonummer und die zu dem Konto gehörige Bankleitzahl gespeichert.

Während die in dem Speicherbereich des Chips gespeicherten Daten vor unautorisierten Zugriffen, insbesondere durch die verschlüsselte Speicherung der Daten, relativ sicher sind, besteht die Gefahr, dass die auf dem Magnetstreifen gespeicherten Daten von unautorisierten Personen zu Missbrauchszwecken ausgelesen werden. Ein besonderes Problem stellt das sogenannte Skimming dar, bei dem über ein Skimmingmodul, das an einem Geldautomaten befestigt wird, unbemerkt von dem Besitzer der Chip- und Magnetstreifenkarte der Magnetstreifen ausgelesen wird. Ferner wird die Eingabe des PINs, beispielsweise mittels versteckt angebrachter Kameras und/oder auf die Tastatur des Geldautomaten aufgebrachten zusätzlichen Tastaturen, erspäht, so dass der den Skimmingangriff durchführende Person sowohl die notwendigen Bankdaten als auch die PIN des Besitzers der Chip- und Magnetstreifenkarte erlangt. Mit Hilfe dieser Informationen kann diese Person Bargeld abheben oder überweisen.

Eine Möglichkeit solchen Skimmingangriffen vorzubeugen ist es, die Geldtransaktionen lediglich über Chipkarten durchzuführen, die nur einen Chip, aber keine Magnetstreifen umfassen. Problematisch
hieran ist, dass in vielen Ländern Geldautomaten verwendet werden, die nicht in der Lage sind den Chip einer Chipkarte auszulesen, sondern die Geldtransaktionen ausschließlich über Magnetstreifen einer Magnetstreifenkarte bearbeiten können. Somit könnten Besitzer einer reinen Chipkarte an solchen Geldautomaten kein Bargeld abheben.

Eine weitere Möglichkeit wäre es, einem Kontoinhaber sowohl eine Chipkarte als auch eine separate Magnetstreifenkarte auszuhändigen, damit der Besitzer in Ländern, in denen Geldautomaten verwendet werden, die Chips von Chipkarten auslesen können, beispielsweise innerhalb der Europäischen Union, mit der sicheren Chipkarte Bargeld abheben kann. Über die separate Magnetstreifenkarte kann der Kontobesitzer auch im Ausland, in dem das Abheben von Bargeld nur mit Hilfe einer Magnetstreifenkarte möglich ist, Bargeld abheben. Problematisch hieran wäre, dass zwei separate Karten benötigt werden.

Aus dem Dokument US 2008/0121726 ist eine Magnetstreifenkarte bekannt, bei dem die Karte selbst ihren Magnetstreifen in regelmäßigen Abständen mit den gleichen Daten neu überschreibt. Die unabhängigen Ansprüche sind gegen dieses Dokument abgegrenzt.

Das Dokument US 5,949,046 beschreibt eine Vorrichtung, die aus dem Magnetstreifen von Magnetstreifenkarten ohne Chip die Daten ausliest und auf neue Chip- und Magnetstreifenkarten kopiert.

Es ist Aufgabe der Erfindung, ein Verfahren zum reversiblen Deaktivieren eines Magnetstreifens einer Chip- und Magnetstreifenkarte und ein Verfahren zum Aktivieren eines Magnetstreifens einer Chip- und Magnetstreifenkarte anzugeben, durch die das Skimming von Bankdaten erschwert wird.

Diese Aufgabe wird durch die Merkmale der unabhängigen Ansprüche
gelöst. Vorteilhafte Weiterbildungen der Erfindung sind in den abhängigen Ansprüchen angegeben.

Erfindungsgemäß wird die Chip- und Magnetstreifenkarte zum reversiblen Deaktivieren des Magnetstreifens in ein Kartenlesegerät eingeführt, das insbesondere in der Lage ist sowohl den Magnetstreifen als auch den Chip der Chip- und Magnetstreifenkarte auszulesen und zu beschreiben. Anschließend wird zumindest ein Teil der auf dem Magnetstreifen der Chip- und Magnetstreifenkarte gespeicherten zum Durchführen einer Geldtransaktion zwingend erforderlichen Daten mit Hilfe des Kartenlesers überschrieben. Hierdurch wird erreicht, dass bei einem Auslesen des Magnetstreifens durch eine unautorisierte Person diese mit den gewonnenen Daten keine Geldtransaktionen vornehmen kann, so dass die unrechtmäßig erspähten Daten für diese Person nutzlos sind.

Unter Geldtransaktionen wird insbesondere das Überweisen von Geld sowie das Abheben von Bargeld verstanden. Bei dem Kartenlesegerät handelt es sich vorzugsweise um ein Kartenlesegerät eines Geldautomaten, so dass der Besitzer der Chip- und Magnetstreifenkarte die Deaktivierung des Magnetstreifens komfortabel und einfach selbst an einem Geldautomaten durchführen kann und hierzu nicht extra zu der die Chip- und Magnetstreifenkarte ausgebenden Bank oder Institution gehen muss. Somit kann der Besitzer der Chip- und Magnetstreifenkarte seinen Magnetstreifen jederzeit deaktivieren, wenn er diesen nicht benötigt.

Bei der Chip- und Magnetstreifenkarte handelt es sich insbesondere um eine EC-Karte, eine Bankkarte und/oder eine Kreditkarte.

Die auf dem Magnetstreifen und die in dem Speicherbereich des Chips gespeicherten Daten zum Durchführen der Geldtransaktion sind vorzugsweise identisch. Alternativ können auch auf dem Magnetstreifen und in dem Speicherbeireich des Chips unterschiedliche Daten gespeichert sein.

Die auf dem Magnetstreifen gespeicherten Daten umfassen insbesondere Informationen über die Kontonummer und/oder die Bankleitzahl des der Chip- und Magnetstreifenkarte zugeordneten Kontos. Bei der Deaktivierung des Magnetstreifens wird durch das Kartenlesegerät vorzugsweise die Kontonummer und/oder die Bankleitzahl überschrieben, so dass eine unautorisierte, den Magnetstreifen auslesende Person kein Geld von dem Konto abheben oder überweisen kann, da ihr die dafür notwendige Kontonummer und/oder Bankleitzahl fehlt. Somit muss nur eine geringe Menge an Daten überschrieben werden und trotzdem sind die auf dem Magnetstreifen vorhandenen Daten wertlos.

Bei einer alternativen Ausführungsform der Erfindung können auch alle auf dem Magnetstreifen gespeicherten Daten überschrieben werden, so dass eine den Magnetstreifen unautorisiert auslesende Person keine verwertbaren Informationen erhält.

Die Daten des Magnetstreifens werden insbesondere mit zufällig erzeugten Daten überschrieben, so dass von den auf dem Magnetstreifen befindlichen Daten keine Rückschlüsse auf die ursprünglichen Daten gezogen werden können und diese Daten für eine den Magnetstreifen unautorisiert auslesende Person völlig unbrauchbar sind.

Alternativ können die Daten des Magnetstreifens auch mit voreingestellten Daten überschrieben werden. Insbesondere werden die Spuren des Magnetstreifens mit dem Text "deactivated" oder "empty" überschrieben. Durch das Überschreiben mit solchen voreingestellten Daten kann jederzeit festgestellt werden, dass die Daten des Magnetstreifens bewusst auf Kundenwunsch überschrieben wurden und nicht ein Fehler oder Manipulationsversuch vorliegt.

Bei einer besonders bevorzugten Ausführungsform werden die zu überschreibenden Daten vor dem Überschreiben ausgelesen und in einem von dem Magnetstreifen verschiedenen Speicherelement gespeichert. Somit wird sichergestellt, dass die zu überschreibenden Daten nicht verloren sind, sondern, beispielsweise zur Aktivierung des Magnetstreifens, wieder aus dem Speicherelement ausgelesen werden und auf den Magnetstreifen geschrieben werden können.

Als Speicherelement zum Speichern der zu überschreibenden Daten wird insbesondere der Chip der Chip- und Magnetstreifenkarte verwendet, so dass die Daten jederzeit wieder von dem Chip auf den Magnetstreifen übertragen werden können, wenn sie benötigt werden. Somit wird zum einen sichergestellt, dass die Daten, die für eine Transaktion notwendig sind, nicht einfach aus dem Magnetstreifen ausgelesen werden können, aber dennoch, falls eine Geldtransaktion nur über den Magnetstreifen möglich ist, die hierfür notwendigen Daten von dem Chip über ein entsprechendes Kartenlesegerät auf dem Magnetstreifen übertragen werden können.

Bei einer alternativen Ausführungsform können die zu überschreibenden Daten auch zusätzlich oder alternativ in einer Datenbank gespeichert werden. Bei der Datenbank handelt es sich insbesondere um eine zentrale Datenbank derjenigen Bank, die die Chip- und Magnetstreifenkarte ausgegeben hat.

Die Daten werden insbesondere verschlüsselt an das Speicherelement übertragen und verschlüsselt in diesem gespeichert. Somit wird die Datensicherheit weiter erhöht.

Ferner ist es vorteilhaft, wenn vor dem Übertragen von Daten an das Speicherelement die zu überschreibenden Daten ausgelesen und mit den bereits im Speicherelement gespeicherten Daten verglichen werden. Ergibt der Vergleich, dass zwischen den bereits im Speicherelement gespeicherten und den zu überschreibenden Daten kein Unterschied besteht, so ist es nicht notwendig, die Daten erneut in dem Speicherelement zu speichern, so dass hierauf verzichtet wird. Andernfalls werden die zu überschreibenden Daten im Speicherelement gespeichert. Alternativ ist es auch möglich, dass die bereits gespeicherten Daten entsprechend der zu überschreibenden Daten geändert werden.

Ein weiterer Aspekt der Erfindung betrifft ein Verfahren zum Aktivieren eines Magnetstreifens einer Chip- und Magnetstreifenkarte, wobei auf dem Magnetstreifen der Chip- und Magnetstreifenkarte nicht alle zum Durchführen einer Geldtransaktion notwendigen Daten gespeichert sind. Zum Aktivieren des Magnetstreifens wird die Chip- und Magnetstreifenkarte in ein Kartenlesegerät eingeführt, das insbesondere derart ausgebildet ist, dass es sowohl von dem Chip als auch dem Magnetstreifen Daten auslesen kann und auf den Chip und den Magnetstreifen Daten schreiben kann. Mit Hilfe des Kartenlesegerätes wird zumindest der fehlende Teil der zum Durchführen einer Geldtransaktion zwingend notwendigen Daten aus dem Speicherelement ausgelesen und auf dem Magnetstreifen gespeichert. Somit wird erreicht, dass über den Magnetstreifen der Chip- und Magnetstreifenkarte die zum Durchführen einer Geldtransaktion notwendigen Daten bereitgestellt sind, so dass mit Hilfe der Chip- und Magnetstreifenkarte auch an Geldautomaten, die lediglich Magnetstreifen auslesen können, Bargeld abgehoben werden kann.

Das Verfahren wird insbesondere angewandt, um den zuvor mit Hilfe des oben beschriebenen Verfahrens deaktivierten Magnetstreifen wieder zu aktivieren, so dass über die Kombination der beiden beschriebenen Verfahren jederzeit der Magnetstreifen einer Chip- und Magnetstreifenkarte aktiviert und deaktiviert werden kann.

Die Daten, die zum Aktivieren auf den Magnetstreifen geschrieben werden, werden insbesondere aus dem Chip der Chip- und Magnetstreifenkarte ausgelesen. Somit ist es nicht notwendig, zum Aktivieren des Magnetstreifens auf ein externes Speicherelement zuzugreifen, so dass das Aktivieren in jedem Kartenlesegerät erfolgen kann, das zum Lesen und zum Beschreiben sowohl von Chips als auch Magnetstreifen geeignet ist. Insbesondere kann somit die Aktivierung in jedem gängigen Geldautomaten, der sowohl Chips als auch Magnetstreifen lesen und beschreiben kann, durchgeführt werden kann. Vorzugsweise werden alle im Speicherberiech des Chips gespeicherten Daten ausgelesen und auf dem Magnetstreifen gespeichert.

Bei einer alternativen Ausführungsform können die zum Aktivieren auf dem Magnetstreifen zu schreibenden Daten auch aus einer Datenbank, insbesondere einer zentralen Datenbank der die Chip- und Magnetstreifenkarte ausgebenden Bank, ausgelesen werden.

Die aus dem Speicherelement ausgelesenen Daten umfassen insbesondere Informationen über die Kontonummer und/oder Bankleitzahl des der Chip- und Magnetstreifenkarte zugeordneten Kontos. Zum Aktivieren ist somit nur eine geringe Datenmenge auf den Magnetstreifen zu speichern.

Ein weiterer Aspekt betrifft ein Verfahren zum Deaktivieren und Aktivieren eines Magnetstreifens einer Chip- und Magnetstreifenkarte, bei dem der Magnetstreifen der Chip- und Magnetstreifenkarte mit Hilfe eines zuvor beschriebenen Verfahrens zum Deaktivieren eines Magnetstreifens zunächst deaktiviert und anschließend mit Hilfe eines zuvor beschriebenen Verfahrens zum Aktivieren des Magnetstreifens wieder aktiviert wird. Mit Hilfe der zuvor beschriebenen Verfahren zum Deaktivieren und Aktivieren des Magnetstreifens der Chip- und Magnetstreifenkarte kann der Besitzer der Chip- und Magnetstreifenkarte den Magnetstreifen jederzeit erneut deaktivieren und aktivieren. Hierzu ist lediglich ein handelsüblicher Geldautomat erforderlich, der ein Kartenlesegerät umfasst, das sowohl Speicherbereiche von Chips als auch Magnetstreifen auslesen und beschreiben kann. Somit kann der Besitzer der Chip- und Magnetstreifenkarte den Magnetstreifen deaktivieren, wenn er sich in einem Land aufhält, in dem Geldautomaten verwendet werden, die die Geldtransaktionen über den Chip durchführen. Somit ist er vor Skimmingangriffen durch das Auslesen des Magnetstreifens bewahrt. Reist die Person dahingegen in ein Land, in dem Geldautomaten verwendet werden, die die Geldtransaktionen über den Magnetstreifen der Chip- und Magnetstreifenkarte durchführen, kann er selbst den Magnetstreifen wieder aktivieren, so dass er die Chip- und Magnetstreifenkarte auch in diesem Land verwenden kann.

Es ist vorteilhaft, wenn zum Deaktivierten lediglich die Kontonummer und/oder Bankleitzahl auf dem Magnetstreifen überschrieben wird, so dass zum anschließenden Aktivieren auch lediglich wiederum nur die Kontonummer und/oder die Bankleitzahl auf dem Magnetstreifen geschrieben werden müssen. Die Kontonummer und/oder Bankleitzahl können jederzeit mit Hilfe eines entsprechenden Kartenlesegerätes aus dem Chip der Chip- und Magnetstreifenkarte ausgelesen werden, so dass in diesem Fall die Aktivierung über jeden gängigen Geldautomaten möglich ist. Insbesondere ist es in diesem Fall nicht notwendig, beim Deaktivieren die zu überschreibenden Daten vor dem Überschreiben zu speichern.

Alternativ können die zu überschreibenden Daten bei der Deaktivierung in einem Speicherelement, vorzugsweise einem Speicherbereich des Chips, gespeichert werden. In diesem Fall werden zur Aktivierung insbesondere diese zuvor bei der Deaktivierung gespeicherten Daten aus dem Speicherelement ausgelesen und wieder auf dem Magnetstreifen gespeichert, so dass auf diesem wieder alle zum Durchführen von Geldtransaktionen notwendigen Daten gespeichert sind.

Ferner ist es möglich, dass bei der Aktivierung alle auf dem Chip gespeicherten Daten auf den Magnetstreifen geschrieben werden, so dass auf dem Chip und dem Magnetstreifen die gleichen Daten gespeichert sind.

Ferner ist es vorteilhaft, wenn vor dem Aktivieren des Magnetstreifens die auf dem Magnetstreifen gespeicherten Daten ausgelesen und mit voreingestellten Soll-Daten verglichen werden. Das Verfahren zum Aktivieren des Magnetstreifens wird nur dann durchgeführt, wenn der Vergleich ergibt, dass die ausgelesenen Daten mit den voreingestellten Soll-Daten übereinstimmen. Insbesondere wird überprüft, ob die ausgelesenen Daten mit den voreingestellten Daten, mit denen die zu überschreibenden Daten bei der Deaktivierung überschrieben werden, übereinstimmen. Somit kann auf einfache Weise überprüft werden, ob der Magnetstreifen bewusst von dem Besitzer der Chip- und Magnetstreifenkarte deaktiviert wurde oder ob eventuell ein Manipulationsversuch vorliegt.

Ein weiterer Aspekt betrifft ein Verfahren zum Aktivieren und Deaktivieren eines Magnetstreifens einer Chip- und Magnetstreifenkarte, bei dem Magnetstreifen zunächst mit Hilfe eines zuvor beschriebenen Verfahrens zum Aktivieren des Magnetstreifens aktiviert und anschließend mit Hilfe eines zuvor beschriebenen Verfahrens zum Deaktivieren des Magnetstreifens deaktiviert wird.

Insbesondere wird die Chip- und Magnetstreifenkarte mit einem deaktivierten Magnetstreifen von der die Chip- und Magnetstreifenkarte ausgebenden Institution dem Besitzer ausgehändigt. Der Besitzer kann mit Hilfe des zuvor beschriebenen Verfahrens jederzeit den Magnetstreifen aktivieren, wenn er diesen benötigt. Somit wird sichergestellt, dass der Besitzer der Chip- und Magnetstreifenkarte sich bewusst ist, dass der Magnetstreifen aktiviert ist und somit Skimmingangriffe möglich sind.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Darstellung einer Vorderseite einer Chip- und Magnetstreifenkarte;
- Figur 2: eine schematische Darstellung einer Rückseite der Chip- und Magnetstreifenkarte nach Figur 1;
- Figur 3: ein Flussdiagramm eines Verfahrens zum Deaktivieren des Magnetstreifens einer Chip- und Magnetstreifenkarte nach den Figuren 1 und 2; und
- Figur 4: ein Flussdiagramm eines Verfahrens zum Aktivieren eines Magnetstreifen einer Chip- und Magnetstreifenkarte nach den Figuren 1 und 2.

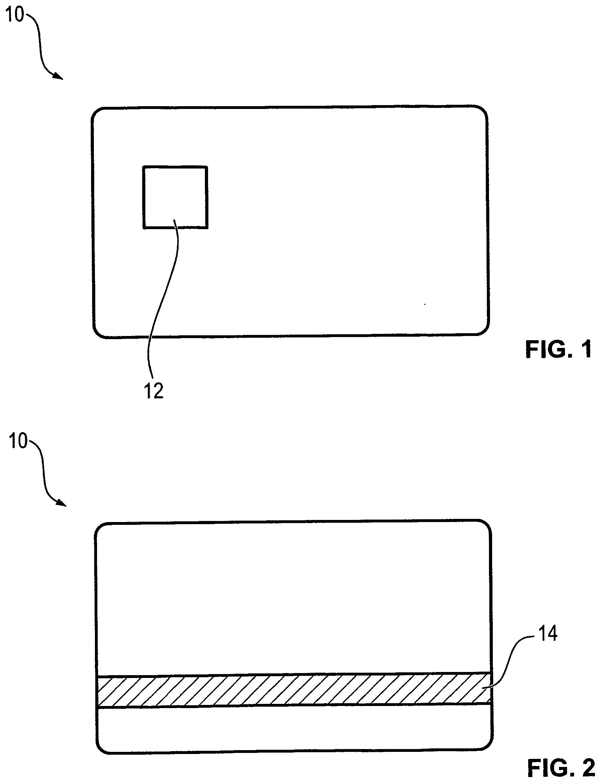

Figur 1 zeigt eine schematische Darstellung einer Vorderseite einer Chip- und Magnetstreifenkarte 10 und Figur 2 eine schematische Darstellung der Rückseite der Chip- und Magnetstreifenkarte 10 nach Figur 1. Bei der Chip- und Magnetstreifenkarte 10 handelt es sich insbesondere um eine Bankkarte, eine EC-Karte und/oder eine Kreditkarte. Im Folgenden wird die Chip- und Magnetstreifenkarte 10 kurz Karte 10 bezeichnet.

Die Karte 10 umfasst einen Chip 12, dessen Kontakte an der Vorderseite der Karte 10 angeordnet sind. Ferner hat die Karte 10 einen Magnetstreifen 14, der bei dem gezeigten Ausführungsbeispiel auf der der Vorderseite gegenüberliegenden Rückseite der Karte 10 angeordnet ist. Bei einer alternativen Ausführungsform der Erfindung können der Chip 12 und der Magnetstreifen 14 auch an derselben Seite der Karte 10 angeordnet sein. Ferner kann der Chip 12 in die Karte 10 integriert sein und drahtlos mit einem entsprechenden Kartenleser kommunizieren.

Die Karte 10 wird insbesondere zum Abheben von Bargeld über Geldautomaten verwendet. Hierzu wird die Karte 10 in einen Kartenleser des Geldautomaten eingeführt, der die für das Abheben des Bargeldes notwendigen Daten aus der Karte 10 ausliest. Hierbei gibt es Geldautomaten, die einen Kartenleser haben, der lediglich Daten aus dem Magnetstreifen 14 auslesen kann. Alternativ gibt es auch Geldautomaten, die lediglich Daten aus dem Chip 12 auslesen können, und Geldautomaten, deren Kartenleser sowohl den Magnetstreifen 14 als auch den Chip 12 auslesen und beschreiben können. Solche Kartenleser werden insbesondere als Hybridkartenleser bezeichnet.

Damit die Karte 10 sowohl in Geldautomaten, deren Kartenleser lediglich den Magnetstreifen 14 auslesen kann, als auch in Geldautomaten mit einem Kartenleser, der sowohl den Chip 12 als auch den Magnetstreifen 14 auslesen kann, verwendet werden kann, sind bei üblichen Karten 10 die zum Durchführen einer Geldtransaktion notwendigen Daten sowohl in einem Speicherbereich des Chips 12 als auch auf dem Magnetstreifen 14 gespeichert. Insbesondere sind hierfür die Kontonummer und die Bankleitzahl desjenigen Kontos, das der Karte 10 zugeordnet, gespeichert.

Während die in dem Speicherbereich des Chips 12 gespeicherten Daten relativ sicher vor dem Auslesen durch unautorisierte Personen sind, sind die auf dem Magnetstreifen 14 gespeicherten Daten für das unautorisierte Auslesen anfällig. Insbesondere werden bei sogenannten Skimmingangriffen über ein Skimmingmodul, das einen vor dem eigentlichen Kartenleser des Geldautomaten angeordneten weiteren Kartenleser umfasst, die auf dem Magnetstreifen 14 gespeicherten Daten ausgelesen. Ferner wird bei einem solchen Skimmingangriff die zu der Karte 10 gehörige PIN, beispielsweise über eine verdeckt angebrachte Kamera, ausgespäht, so dass die die den Skimmingangriff durchführende Person anschließend sowohl die Bankdaten als auch die PIN kennt und somit unautorisiert Geld von dem Konto abheben kann.

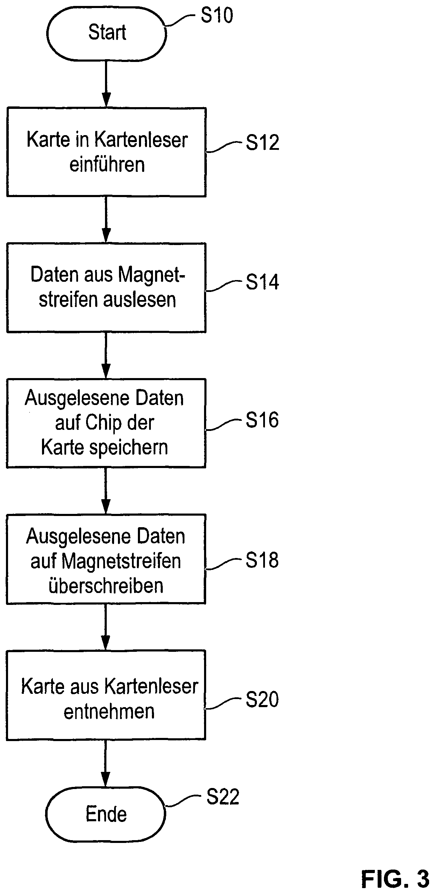

Um solche Skimmingangriffe zu vermeiden, wird das im Folgenden in Verbindung mit Figur 3 beschriebene Verfahren zum Deaktivieren des Magnetstreifens 14 der Karte 10 verwendet, so dass bei einem Skimmingangriff die von der den Skimmingangriff durchführenden Person ausgelesenen Daten nicht ausreichen, um Geld von dem Konto abzuheben und somit wertlos sind.

Das Verfahren zum Deaktivieren des Magnetstreifens 14 der Karte 10 wird im Schritt S10 gestartet. Anschließend wird im Schritt S12 die Karte 10 in einen Kartenleser eingeführt. Insbesondere wird die Karte 10 in einen Geldautomaten, der über einen Hybridkartenleser verfügt, eingegeben.

Danach werden im Schritt S14 die Daten aus dem Magnetstreifen 14 ausgelesen und im Schritt S16 auf dem Chip 12 der Karte 10 gespeichert. Nachdem die ausgelesenen Daten auf dem Chip 12 gespeichert wurden, werden diese Daten auf den Magnetstreifen 14 überschrieben, so dass die ursprünglich gespeicherten Daten nicht mehr bei einem Skimmingangriff ausgelesen werden können.

Die auszulesenden und zu überschreibenden Daten sind insbesondere derart gewählt, dass, wenn diese Daten überschrieben sind, die noch auf dem Magnetstreifen 14 gespeicherten Daten nicht ausreichen, um eine Geldtransaktion durchzuführen.

Bei einer besonders bevorzugten Ausführungsform werden alle auf dem Magnetstreifen 14 gespeicherten Daten überschrieben, so dass keine verwertbaren Daten mehr auf dem Magnetstreifen 14 gespeichert sind. Alternativ reicht es auch aus, wenn die Kontonummer und/oder die Bankleitzahl des zu der Karte 10 gehörenden Kontos überschrieben werden.

Anschließend wird im Schritt S20 die Karte aus dem Kartenleser entnommen, bevor das Verfahren im Schritt S22 beendet wird. Nachdem das Verfahren durchgeführt wurde, ist es nicht mehr möglich, mit Hilfe der auf dem Magnetstreifen 14 gespeicherten Daten Geldtransaktionen durchzuführen, so dass, selbst wenn die Karte 10 geskimmt wird, die den Skimmingangriff durchführende Person mit den Daten nichts anfangen kann und somit dem Besitzer der Karte 10 bzw. der Bank kein Schaden zugefügt werden kann.

Die ausgelesenen und zu überschreibenden Daten werden im Schritt S18 insbesondere mit zufällig erzeugten Daten überschrieben. Alternativ können die Daten auch mit voreingestellten Daten, beispielsweise mit dem Text "deactivated" oder "empty" überschrieben werden. Das Überschreiben mit voreingestellten Daten hat den Vorteil, dass nach dem Deaktivieren des Magnetstreifens 14, wenn die Karte 10 erneut in einen Kartenleser eingeführt wird, nachvollzogen werden kann, dass der Magnetstreifen 14 gewollt von dem Besitzer der Karte 10 deaktiviert wurde. Hierzu werden insbesondere die auf dem Magnetstreifen 14 gespeicherten Daten mit den zum Überschreiben verwendeten voreingestellten Daten verglichen.

Bei einem alternativen Verfahren kann auch auf die Schritte S14 und S16 verzichtet werden. Dies ist insbesondere dann der Fall, wenn lediglich die Kontonummer und/oder die Bankleitzahl überschrieben werden. Diese sind ohnehin auch im Speicherbereich des Chips 12 gespeichert, so dass sie jederzeit wieder mit Hilfe eines Kartenlesegeräts aus diesem ausgelesen und auf dem Magnetstreifen 14 gespeichert werden können. Somit ist es nicht notwendig, zuvor die auf dem Magnetstreifen 14 gespeicherten Daten auszulesen und in dem Speicherbereich des Chips 12 zu speichern.

Bei einer weiteren alternativen Ausführungsform können die aus dem Magnetstreifen 14 ausgelesenen Daten auch zusätzlich oder alternativ zu dem Speicherbereich des Chips 12 auf einem externen Speicherelement, insbesondere in einer Datenbank der die Karte 10 ausgegebenen Bank, gespeichert werden.

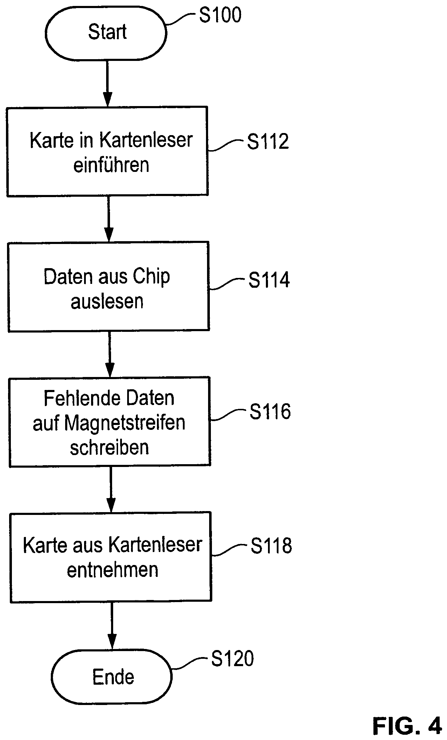

In Figur 4 ist ein Flussdiagramm eines Verfahrens zum Aktivieren eines zuvor deaktivierten Magnetstreifens 14 der Karte 10 gezeigt. Nachdem das Verfahren im Schritt S100 gestartet wurde, wird die Karte 10 im Schritt S112 in einen Kartenleser eingesetzt. Die Karte 10 wird hierbei insbesondere in einen Hybridkartenleser eines Geldautomaten eingeführt.

Anschließend werden im Schritt S114 die Daten aus dem Chip 12 ausgelesen und im Schritt S116 zumindest die Daten, die für das Durchführen einer Geldtransaktion zwangsläufig erforderlich sind und noch nicht auf dem Magnetstreifen 14 gespeichert sind, auf den Magnetstreifen 14 geschrieben. Somit sind auf dem Magnetstreifen 14 wieder alle zur Durchführung von Geldtransaktionen notwendigen Daten gespeichert, so dass mit Hilfe der Karte 10 auch von Geldautomaten, die lediglich den Magnetstreifen 14 auslesen können, Bargeld abgehoben werden kann.

Anschließend wird im Schritt S118 die Karte 10 aus dem Kartenleser entnommen, bevor das Verfahren im S120 beendet wird.

Im Schritt S116 werden insbesondere diejenigen Daten auf dem Magnetstreifen 14 gespeichert, die bei dem Verfahren zur Deaktivierung des Magnetstreifens 14 zuvor im Speicherelement des Chips 12 im Schritt S16 gespeichert wurden.

Fehlen auf dem Magnetstreifen 14 vor dem Durchführen des Verfahrens zur Aktivierung des Magnetstreifens 14 lediglich die Kontonummer und/oder die Bankleitzahl, die aus ohnehin in dem Speicherbereich des Chips 12 gespeicherten Daten generiert werden können, so ist es nicht notwendig ist, beim Deaktivieren Daten im Speicherbereich des Chips 12 zu speichern, die anschließend beim Aktivieren wieder ausgelesen werden.

Über die zuvor beschriebenen Verfahren zum Deaktivieren und Aktivieren des Magnetstreifens 14 kann der Besitzer der Karte 10 jederzeit mit Hilfe eines Geldautomaten, der über einen Hybridkartenleser verfügt, den Magnetstreifen 14 beliebig deaktivieren und aktivieren, so dass er, wenn er den Magnetstreifen 14 nicht benötigt, diesen deaktivieren kann und somit vor Skimmingangriffen geschützt ist, und, wenn er den Magnetstreifen 14 benötigt, diesen nutzen kann.

Alternativ kann das Deaktivieren und Aktivieren auch anstelle mit Hilfe eines Geldautomaten über ein spezielles hierfür vorgesehenes Gerät der Bank, die die Karte 10 ausgeben hat, oder eines Servicedienstleisters erfolgen.

Nachdem der Besitzer die Karte 10 in Schritt S12 bzw. S112 in den Kartenleser eingeführt hat, wird ihm insbesondere über eine Anzeigeeinheit angezeigt, ob der Magnetstreifen 14 aktiviert bzw. deaktiviert ist. Der Besitzer der Karte 10 kann hieraufhin über eine Eingabeeinheit, insbesondere eine Tastatur, wählen, ob der Magnetstreifen 14 aktiviert bzw. deaktiviert werden soll, oder ob er in dem jeweiligen Status verbleiben soll. Insbesondere wird für die Deaktivierung und/oder Aktivierung des Magnetstreifens 14 die zu der Karte 10 gehörige PIN abgefragt, so dass das Deaktivieren und Aktivieren nur über eine autorisierte Person, insbesondere den Besitzer der Karte 10, durchgeführt werden kann.

Die im Schritt S16 auf dem Chip 12 gespeicherten Daten werden insbesondere verschlüsselt gespeichert, so dass eine sichere Datenspeicherung erreicht wird. Insbesondere erfolgt auch das Übertragen der Daten an den Magnetstreifen 14 bzw. der ausgelesenen Daten an den Chip 12 verschlüsselt.

Im Speicherbereich des Chips 12 ist insbesondere ein Computerprogramm gespeichert, das zum Durchführen der zuvor beschriebenen Verfahren zum Aktivieren bzw. Deaktivieren des Magnetstreifens 14 abgearbeitet wird. Alternativ kann das Computerprogramm auch in einem Speicherelement des Kartenlesers und/oder des Geldautomaten, zu dem der Kartenleser gehört, gespeichert sein und durch eine entsprechende Steuereinheit abgearbeitet werden.

### Bezugszeichenliste

- 10: Karte
- 12: Chip
- 14: Magnetstreifen
- S10 bis S120: Verfahrensschritt

## Patentansprüche

1. Verfahren zur reversiblen Deaktivierung eines Magnetstreifens einer Chip- und Magnetstreifenkarte,
wobei die Chip- und Magnetstreifenkarte (10), auf deren Magnetstreifen (14) Daten zum Durchführen von Geldtransaktionen gespeichert sind, in ein Kartenlesegerät eingeführt wird, und
wobei zumindest ein Teil der auf dem Magnetstreifen (14) gespeicherten, zum Durchführen einer Geldtransaktion zwingend erforderlichen Daten durch das Kartenlesegerät überschrieben wird,
**dadurch gekennzeichnet, dass**
die zu überschreibenden Daten vor dem Überschreiben ausgelesen und in einem von dem Magnetstreifen (14) verschiedenen Speicherelement (12) gespeichert werden, und
dass die zu überschreibenden Daten in einem Speicherbereich des Chips (12) derselben Chip- und Magnetstreifenkarte (10) gespeichert werden.

2. Verfahren nach Anspruch 1, **dadurch gekennzeichnet, dass** die auf dem Magnetstreifen (14) gespeicherten Daten Informationen über die Kontonummer und/oder die Bankleitzahl eines der Chip- und Magnetstreifenkarte (10) zugeordneten Kontos umfassen, und dass die Kontonummer und/oder die Bankleitzahl überschrieben wird.

3. Verfahren nach einem der vorhergehenden Ansprüche, **dadurch gekennzeichnet, dass** alle auf dem Magnetstreifen (14) gespeicherten Daten überschrieben werden.

4. Verfahren nach einem der vorhergehenden Ansprüche, **dadurch gekennzeichnet, dass** die Daten des Magnetstreifens (14) mit zufällig erzeugten Daten überschrieben werden.

5. Verfahren nach einem der Ansprüche 1 bis 3, **dadurch gekennzeichnet, dass** die Daten des Magnetsteifens (14) mit voreingestellten Daten überschrieben werden.

6. Verfahren nach einem der vorhergehenden Ansprüche, **dadurch gekennzeichnet, dass** die zu überschreibenden Daten in einer Datenbank gespeichert werden.

7. Verfahren nach einem der vorhergehenden Ansprüche, **dadurch gekennzeichnet, dass** die Daten verschlüsselt gespeichert und/oder verschlüsselt an das Speicherelement übertragen werden.

8. Verfahren nach einem der vorhergehenden Ansprüche, **dadurch gekennzeichnet, dass** vor dem Übertragen von Daten an das Speicherelement die zu überschreibenden Daten ausgelesen und mit den bereits in dem Speicherelement gespeicherten Daten verglichen werden, und dass in Abhängigkeit des Ergebnisses dieses Vergleichs festgelegt wird, ob die zu überschreibenden Daten in dem Speicherelement gespeichert werden.

9. Verfahren zum Aktivieren eines Magnetstreifens einer Chip- und Magnetstreifenkarte,
wobei die Chip- und Magnetstreifenkarte (10), auf deren Magnetstreifen (14) nicht alle zum Durchführen einer Geldtransaktion zwingend erforderlichen Daten gespeichert sind, in ein Kartenlesegerät eingeführt wird, und **dadurch gekennzeichnet, dass**
zumindest der fehlende Teil der zum Durchführen einer Geldtransaktion zwingend notwendigen Daten durch das Kartenlesegerät aus dem Chip (12) der Magnetstreifen- und Chipkarte (10) ausgelesen
und durch das Kartenlesegerät auf dem Magnetstreifen (14) derselben Magnetstreifen- und Chipkarte (10) gespeichert wird.

10. Verfahren zum Deaktivieren und Aktivieren eines Magnetstreifens einer Chip- und Magnetstreifenkarte,
bei dem der Magnetstreifen (14) der Chip- und Magnetstreifenkarte (10) mit Hilfe eines Verfahrens nach einem der Ansprüche 1 bis 8 zunächst deaktiviert wird, und
bei dem der deaktivierte Magnetstreifen (14) anschließend mit Hilfe des Verfahrens nach Anspruch 9 wieder aktiviert wird.

11. Verfahren zum Aktivieren und Deaktivieren eines Magnetstreifens einer Chip- und Magnetstreifenkarte,
bei dem der Magnetstreifen (14) zunächst mit Hilfe des Verfahrens nach Anspruch 9 aktiviert wird, und
bei dem der aktivierte Magnetstreifen (14) der Chip- und Magnetstreifenkarte (10) anschließend wieder mit Hilfe eines Verfahrens nach einem der Ansprüche 1 bis 8 deaktiviert wird.

12. Verfahren nach einem der Ansprüche 1 bis 11,
**dadurch gekennzeichnet, dass** die Chip- und Magnetstreifenkarte (10) zum Deaktivieren und/oder Aktivieren des Magnetstreifens (14) in ein Kartenlesegerät eines Geldautomaten eingeführt wird.

## Claims

1. A method for reversibly deactivating a magnetic stripe of a chip and magnetic stripe card,
wherein the chip and magnetic stripe card (10), on the magnetic stripe (14) of which data for performing cash transactions are stored, is inserted into a card reader, and
wherein at least a part of the data stored on the magnetic stripe (14) and inevitably necessary for performing a cash transaction is overwritten by the card reader,
**characterized in that**
the data to be overwritten are read out prior to the overwriting and are stored in a memory element (12) different from the magnetic stripe (14), and
that the data to be overwritten are stored in a memory area of the chip (12) of the same chip and magnetic stripe card (10).

2. The method according to claim 1, **characterized in that** the data stored on the magnetic stripe (14) comprise information on the account number and/or the bank code of an account assigned to the chip and magnetic stripe card (10) and that the account number and/or the bank code is overwritten.

3. The method according to one of the preceding claims, **characterized in that** all data stored on the magnetic stripe (14) are overwritten.

4. The method according to one of the preceding claims, **characterized in that** the data of the magnetic stripe (14) are overwritten with randomly generated data.

5. The method according to one of the claims 1 to 3, **characterized in that** the data of the magnetic stripe (14) are overwritten with preset data.

6. The method according to one of the preceding claims, **characterized in that** the data to be overwritten are stored in a data base.

7. The method according to one of the preceding claims, **characterized in that** the data are stored in an encoded manner and/or are transferred to the memory element in an encoded manner.

8. The method according to one of the preceding claims, **characterized in that** prior to the transfer of data to the memory element the data to be overwritten are read out and are compared with the data already stored in the memory element, and that dependent on the result of this comparison it is determined whether the data to be overwritten are stored in the memory element.

9. A method for activating a magnetic stripe of a chip and magnetic stripe card,
wherein the chip and magnetic stripe card (10), on the magnetic stripe (14) of which not all data inevitably necessary for performing a cash transaction are stored, is inserted into a card reader, and
**characterized in that**
at least the missing part of the data inevitably necessary for performing a cash transaction is read out by the card reader from the chip (12) of the magnetic stripe and chip card (10),
and is stored by the card reader on the magnetic stripe (14) of the same magnetic stripe and chip card (10).

10. A method for deactivating and activating a magnetic stripe of a chip and magnetic stripe card,
in which the magnetic stripe (14) of the chip and magnetic stripe card (10) is at first deactivated by means of a method according to one of the claims 1 to 8, and
in which the deactivated magnetic stripe (14) is subsequently again activated by means of the method according to claim 9.

11. A method for activating and deactivating a magnetic stripe of a chip and magnetic stripe card,
in which the magnetic stripe (14) is at first activated by means of the method according to claim 9, and
in which the activated magnetic stripe (14) of the chip and magnetic stripe card (10) is subsequently again deactivated by means of a method according to one of the claims 1 to 8.

12. The method according to one of the claims 1 to 11, **characterized in that** the chip and magnetic stripe card (10) is inserted into a card reader of an automated teller machine for deactivating and/or activating the magnetic stripe (14).

## Revendications

1. Procédé de désactivation réversible d'une bande magnétique d'une carte à puce et à bande magnétique,
la carte à puce et à bande magnétique (10), sur laquelle des données permettant la réalisation de transactions monétaires sont mises en mémoire, étant introduite dans un lecteur de carte, et
au moins une partie des données mises en mémoire sur la bande magnétique (14) et absolument indispensables à la réalisation d'une transaction monétaire étant écrasées par le lecteur de carte,
**caractérisé en ce que** les données à écraser sont consultées avant d'être écrasées et mises en mémoire dans un élément de mémoire (12) différent de la bande magnétique (14), et **en ce que** les données à écraser sont mises en mémoire dans une zone de mise en mémoire de la puce (12) de cette même carte à puce et à bande magnétique (10).

2. Procédé selon la revendication 1, **caractérisé en ce que** les données mises en mémoire sur la bande magnétique (14) comportent des informations concernant le numéro de compte et/ou le code bancaire d'un compte associé à la carte à puce et à bande magnétique (10), et **en ce que** le numéro de compte et/ou le code bancaire sont écrasés.

3. Procédé selon l'une quelconque des revendications précédentes, **caractérisé en ce que** toutes les données mises en mémoire sur la bande magnétique (14) sont écrasées.

4. Procédé selon l'une quelconque des revendications précédentes, **caractérisé en ce que** les données de la bande magnétique (14) sont écrasées par des données générées de façon aléatoire.

5. Procédé selon l'une quelconque des revendications 1 à 3, **caractérisé en ce que** les données de la bande magnétique (14) sont écrasées par des données préétablies.

6. Procédé selon l'une quelconque des revendications précédentes, **caractérisé en ce que** les données à écraser sont mises en mémoire dans une base de données.

7. Procédé selon l'une quelconque des revendications précédentes, **caractérisé en ce que** les données sont mises en mémoire en étant cryptées et/ou transmises à l'élément de mémoire en étant cryptées.

8. Procédé selon l'une quelconque des revendications précédentes, **caractérisé en ce qu'**avant la transmission de données à l'élément de mémoire, les données à écraser sont consultées et comparées aux données déjà mises en mémoire dans l'élément de mémoire, et **en ce qu'**en fonction du résultat de cette comparaison, il est déterminé si les données à écraser sont mises en mémoire dans l'élément de mémoire.

9. Procédé d'activation d'une bande magnétique d'une carte à puce et à bande magnétique, la carte à puce et à bande magnétique (10), sur laquelle les données absolument indispensables à la réalisation d'une transaction monétaire ne sont pas toutes mises en mémoire, étant introduite dans un lecteur de carte, et
**caractérisé en ce qu'**au moins la partie manquante des données absolument indispensables à la réalisation d'une transaction monétaire est consultée par le lecteur de carte à partir de la puce (12) de la carte à bande magnétique et à puce (10) et mise en mémoire par le lecteur de carte sur la bande magnétique (14) de cette même carte magnétique et à puce (10).

10. Procédé de désactivation et d'activation d'une bande magnétique d'une carte à puce et à bande magnétique,
selon lequel la bande magnétique (14) de la carte à puce et à bande magnétique (10) commence par être désactivée à l'aide d'un procédé selon l'une quelconque des revendications 1 à 8, et
selon lequel la bande magnétique (14) désactivée est ensuite réactivée à l'aide du procédé selon la revendication 9.

11. Procédé d'activation et de désactivation d'une bande magnétique d'une carte à puce et à bande magnétique,
selon lequel la bande magnétique (14) commence par être activée à l'aide du procédé selon la revendication 9, et
selon lequel la bande magnétique (14) activée de la carte à puce et à bande magnétique (10) est ensuite à nouveau désactivée à l'aide d'un procédé selon l'une quelconque des revendications 1 à 8.

12. Procédé selon l'une quelconque des revendications 1 à 11, **caractérisé en ce que** la carte à puce et à bande magnétique (10) est introduite dans un lecteur de carte d'un distributeur automatique de billets pour désactiver et/ou activer la bande magnétique (14).
